# EUROPEAN PATENT APPLICATION

(11) **EP 4 832 162 A1**
(43) Date of publication of application: **28.10.2026**
(21) Application number: 24925634.8
(22) Date of filing: 23.12.2024
(51) Int. Cl.: H01M 10/613

(54) **THERMAL MANAGEMENT DEVICE, BATTERY, AND ELECTRIC DEVICE**

(30) Priority: 23.02.2024 CN 202410205264
(71) Applicant: Contemporary Amperex Technology Co., Limited, Ningde, Fujian 352100 (CN)
(72) Inventor: SONG, Feiting, Ningde, Fujian 352100 (CN); HUANG, Xiaoteng, Ningde, Fujian 352100 (CN); LIU, Hongbiao, Ningde, Fujian 352100 (CN)
(74) Representative: Lorenz Seidler Gossel Part. mbB
(86) International application number: PCT/CN2024/141375
(87) International publication number: WO 2025/175896

(57) **Abstract**

The present application relates to a thermal management device, a battery, and an electric device. The thermal management device comprises a heat exchange unit, and the heat exchange unit comprises: a heat exchange tube section, the heat exchange tube section being provided with an inlet end, an outlet end, and a heat exchange channel communicated with the inlet end and the outlet end; and collecting tube sections, the inlet end and the outlet end both being connected to the collecting tube sections, wherein the tube width of at least one collecting tube section is less than that of the heat exchange tube section. According to the thermal management device provided in the present application, the risk of thermal runaway of the battery can be reduced, and a space layout requirement of the thermal management device can be met.

## Description

### CROSS-REFERENCE TO RELATED APPLICATION

The present application claims priority to Chinese Patent Application No. 202410205264.4, filed on February 23, 2024 and entitled "THERMAL MANAGEMENT DEVICE, BATTERY, AND ELECTRIC DEVICE", the content of which is incorporated herein by reference in its entirety.

### TECHNICAL FIELD

The present application relates to the technical field of batteries, and in particular, to a thermal management device, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

In the development of battery technology, how to improve the heat exchange efficiency while ensuring the space utilization rate is a research direction in the battery technology.

### SUMMARY

Embodiments of the present application provide a thermal management device, a battery, and an electric device. The thermal management device can improve the heat exchange efficiency while ensuring the space utilization rate.

In one aspect, according to one embodiment of the present application, a thermal management device is provided. The thermal management device includes a heat exchange unit. The heat exchange unit includes: a heat exchange tube segment, the heat exchange tube segment being provided with an inlet end, an outlet end, and a heat exchange channel communicating the inlet end with the outlet end; and manifold segments, the inlet end and the outlet end both being connected to the manifold segments, where a tube width of at least one of the manifold segments is less than a tube width of the heat exchange tube segment.

The thermal management device according to one embodiment of the present application includes a heat exchange unit. The heat exchange unit includes a heat exchange tube segment and manifold segments. A heat exchange medium can be guided into the heat exchange tube segment via the manifold segment connected to the inlet end, and flows out from the manifold segment connected to the outlet end after exchanging heat with the components to be heat-exchanged, such as the battery cell, via the heat exchange tube segment. Since the tube width of at least one of the manifold segments is less than the tube width of the heat exchange tube segment, the width of the heat exchange tube segment can be increased, thereby increasing the heat exchange area, improving the heat exchange efficiency, ensuring the heat exchange effect, and reducing the risk of thermal runaway of the battery to which the thermal management device is applied. In addition, this arrangement can ensure that the manifold segments are arranged within a small space, thereby meeting the spatial layout requirements of the thermal management device and improving the space utilization rate of the thermal management device.

According to an aspect of the embodiments of the present application, a cross-sectional shape of the heat exchange tube segment in an extension direction of the heat exchange tube segment is one of a polygon, an ellipse, and an obround, and at least part of a cross-sectional shape of the manifold segment in an extension direction of the manifold segment is one of a polygon, an ellipse, and an obround.

In the above solution, the heat exchange tube segment and the manifold segment adopt the structural forms described above, allowing the heat exchange tube segment and the manifold segment to be arranged in a flat shape. Under the condition of flowing the same volume of heat exchange medium, this arrangement facilitates the increase in the contact area between the heat exchange tube segment and the components to be heat-exchanged, such as the battery cell, thereby increasing the heat exchange area, ensuring the heat exchange effect, and reducing the risk of thermal runaway of the battery to which the thermal management device is applied. In addition, the above arrangement facilitates the saving of the design space of the manifold segment and the spatial arrangement of the manifold segment.

According to an aspect of the embodiments of the present application, the cross-sectional shape of the heat exchange tube segment in the extension direction of the heat exchange tube segment is a rectangle, and at least part of the cross-sectional shape of the manifold segment in the extension direction of the manifold segment is a rectangle and/or at least part of the cross-sectional shape is a circle.

In the above solution, by allowing the cross-sectional shape of the heat exchange tube segment in the extension direction of the heat exchange tube segment to be a rectangle, and allowing at least part of the cross-sectional shape of the manifold segment in the extension direction of the manifold segment to be a rectangle and at least part of the cross-sectional shape to be a circle, the contact area between the heat exchange tube segment and the components to be heat-exchanged, such as the battery cell, can be ensured to be increased, thereby increasing the heat exchange area and ensuring the heat exchange effect. In addition, the above arrangement also facilitates the layout of the manifold segments and the connection with the inlet and outlet of the heat exchange medium.

According to an aspect of the embodiments of the present application, the manifold segments connected to the inlet end and the outlet end are located on a same side of the heat exchange tube segment in a first direction and are spaced apart in a second direction, and the second direction is arranged to intersect with the first direction.

In the above solution, by allowing the manifold segments connected to the inlet end and the outlet end to be located on the same side of the heat exchange tube segment in the first direction and be spaced apart in the second direction, the spatial arrangement of the manifold segments is facilitated. In addition, the above arrangement enables the heat exchange tube segment to be bent, thereby increasing the distribution length of the heat exchange tube segment, ensuring the contact area with the components to be heat-exchanged such as the battery cell, ensuring the heat exchange effect, and reducing the risk of thermal runaway of the battery to which the thermal management device is applied.

According to an aspect of the embodiments of the present application, the heat exchange unit further includes an adapter tube segment, the adapter tube segment is provided with a first port and a second port that are in communication with each other, an opening width of the first port is less than an opening width of the second port, the first port is connected to the manifold segment, and the second port is connected to one of the inlet end and the outlet end.

In the above solution, by allowing the heat exchange unit to further include the adapter tube segment, the connection between the heat exchange tube segment with varying width dimensions and the manifold segment via the adapter tube segment is facilitated, thereby ensuring the requirements for the communication between the heat exchange tube segment and the manifold segment and reducing the forming difficulty of the thermal management device. In addition, the manifold segment and the adapter tube segment of corresponding widths are allowed to be matched based on different spatial arrangement requirements, thereby improving the versatility of the thermal management device.

According to an aspect of the embodiments of the present application, a width dimension of the adapter tube segment gradually increases in a direction from the first port to the second port.

In the above solution, by allowing the width of the adapter tube segment to gradually increase, the resistance, caused by an abrupt change in the width dimension of the heat exchange tube segment and the manifold segment, to the flow of the heat exchange medium can be reduced, thereby ensuring the smooth circulation of the heat exchange medium and ensuring the heat exchange effect of the thermal management device.

According to an aspect of the embodiments of the present application, the inlet end and the outlet end are both connected to a corresponding manifold segment via the adapter tube segment.

In the above solution, by allowing the inlet end and the outlet end to be connected to the corresponding manifold segment via the adapter tube segment, the connection between the heat exchange tube segment with varying width dimensions at different positions and the manifold segment via the adapter tube segment is facilitated, thereby ensuring the requirements for the communication between the heat exchange tube segment and the manifold segment.

According to an aspect of the embodiments of the present application, the heat exchange tube segment and the manifold segment are of an integrated structure.

In the above solution, by allowing the heat exchange tube segment and the manifold segment to be of an integrated structure, the requirements for the connection strength between the heat exchange tube segment and the manifold segment can be ensured, thereby ensuring the sealing performance of the heat exchange unit, and meanwhile simplifying the forming process.

According to an aspect of the embodiments of the present application, the manifold segment is partially inserted into one of the inlet end and the outlet end and is connected to the heat exchange tube segment.

In the above solution, by allowing the manifold segment to be partially inserted into one of the inlet end and the outlet end and be connected to the heat exchange tube segment, the requirements for the connection between the manifold segment and the heat exchange tube segment can be ensured, and the manifold segment and the heat exchange tube segment can be formed separately and then connected, thereby reducing the forming difficulty.

According to an aspect of the embodiments of the present application, at least one of the manifold segments includes a first portion and a second portion that are arranged to intersect and are in communication with each other, and the second portion is connected to one of the inlet end and the outlet end.

In the above solution, by allowing the manifold segment to include the first portion and the second portion that are arranged to intersect and are in communication with each other, and allowing the second portion to be connected to one of the inlet end and the outlet end, the requirements for the connection between the manifold segment and the heat exchange tube segment can be ensured to be met, and the portion of the manifold segment in communication with at least one of the inlet and the outlet of the heat exchange medium can be reversed relative to the heat exchange tube segment, thereby reducing the space occupied by the thermal management device in the manifold segment and facilitating the spatial layout of the thermal management device on the basis of ensuring the heat exchange requirements.

According to an aspect of the embodiments of the present application, a liquid passage area of the manifold segment is less than a liquid passage area of the heat exchange tube segment.

In the above solution, by allowing the liquid passage area of the manifold segment to be less than the liquid passage area of the heat exchange tube segment, the reduction in the width of the manifold segment is facilitated, thereby ensuring the spatial layout requirements of the thermal management device.

According to an aspect of the embodiments of the present application, two or more heat exchange units are provided, and the two or more heat exchange units are spaced apart in a same direction.

In the above solution, by providing two or more heat exchange units included in the thermal management device, the number of the heat exchange units can be adjusted based on the heat exchange requirements of apparatuses such as the battery, thereby ensuring the heat exchange effect.

In another aspect, according to one embodiment of the present application, a battery is provided. The battery includes the thermal management device described above.

In yet another aspect, according to one embodiment of the present application, an electric device includes the battery described above.

### BRIEF DESCRIPTION OF THE DRAWINGS

Features, advantages, and technical effects of exemplary embodiments of the present application will be described below with reference to the drawings.
FIG. 1 is a schematic diagram of a vehicle according to one embodiment of the present application;
FIG. 2 is a schematic diagram of an exploded structure of a battery according to one embodiment of the present application;
FIG. 3 is a schematic diagram of the cooperation between a thermal management device and a battery cell according to one embodiment of the present application;
FIG. 4 is a schematic structural diagram of a thermal management device according to one embodiment of the present application;
FIG. 5 is a partially enlarged view of portion A in FIG. 4;
FIG. 6 is a schematic structural diagram of an adapter tube segment according to one embodiment of the present application;
FIG. 7 is a schematic structural diagram of a manifold segment according to one embodiment of the present application;
FIG. 8 is a schematic structural diagram of a thermal management device according to another embodiment of the present application; and
FIG. 9 is a schematic structural diagram of a thermal management device according to yet another embodiment of the present application.

Here:
1 - vehicle;
10 - battery; 101 - case; 101a - first case part; 101b - second case part;
20 - battery module; 21 - battery cell;
30 - controller; 40 - motor; 50 - thermal management device;
51 - heat exchange unit;
511 - heat exchange tube segment; 5111 - inlet end; 5112 - outlet end;
512 - manifold segment; 5121 - first portion; 5122 - second portion;
513 - adapter tube segment; 5131 - first port; 5132 - second port;
X - first direction; Y - second direction.

In the figures, the same components are marked with the same reference numerals. The drawings are not drawn to scale.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the present application, battery cells may include lithium-ion secondary battery cells, lithium-ion primary battery cells, lithium-sulfur battery cells, sodium-lithium-ion battery cells, sodium-ion battery cells, magnesium-ion battery cells, etc., which are not limited in the embodiments of the present application. The battery cell may be cylindrical, flat, rectangular parallelepiped-shaped, or in other shapes. This is also not limited in the embodiments of the present application. According to the packaging method, the battery cells are typically divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a case configured to encapsulate one or more battery cells. The case can prevent liquid or other foreign matter from affecting the charging or discharging of the battery cells.

A battery cell includes an electrode assembly and an electrolyte. The electrode assembly is composed of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The current collector not coated with the positive electrode active substance layer protrudes from the current collector coated with the positive electrode active substance layer. The current collector not coated with the positive electrode active substance layer is stacked and serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The current collector not coated with the negative electrode active substance layer protrudes from the current collector coated with the negative electrode active substance layer. The current collector not coated with the negative electrode active substance layer is stacked and serves as a negative electrode tab. The material of the negative electrode current collector may be copper, and the negative electrode active substance may be carbon, silicon, or the like. The material of the separator may be polypropylene (PP), polyethylene (PE), or the like. In addition, the electrode assembly may be of a wound structure or a stacked structure, but the embodiments of the present application are not limited thereto.

The battery cell disclosed in the embodiments of the present application can be used in, but is not limited to be used in, electric devices such as vehicles, ships, or aircraft. The power system of the electric device may be composed of the battery cell, the battery, and the like disclosed in the present application. This helps to improve the stability of battery performance and the lifespan of the battery.

The battery exhibits different electrical cycle performance under different ambient temperatures. When the ambient temperature is too high or too low, the cycle performance of the battery degrades, and the service life of the battery may even be shortened. To ensure the safety, stable performance, and excellent operation of new energy vehicles, effective thermal management of the battery is required to maintain the battery operation within a suitable temperature range.

The thermal management device may be configured to exchange heat with the battery cells of the battery, thereby achieving effective thermal management of the battery cells. The inventors have found through research that there is room for further improving the overall reliability of the battery. Further research reveals that the thermal management device in the related art has insufficient heat exchange capacity, fails to ensure that the battery cells operate within a suitable temperature range, and, due to space limitations, is not conducive to the improvement of the heat exchange capacity of the thermal management device.

To improve the heat exchange capacity of the thermal management device, the inventors have conducted in-depth research and designed a thermal management device. The thermal management device includes a heat exchange unit. The heat exchange unit includes a heat exchange tube segment and manifold segments. The heat exchange tube segment is provided with an inlet end, an outlet end, and a heat exchange channel communicating the inlet end with the outlet end. The inlet end and the outlet end are both connected to the manifold segments. The tube width of at least one of the manifold segments is less than the tube width of the heat exchange tube segment. In the above solution, the heat exchange unit includes a heat exchange tube segment and manifold segments. The heat exchange medium can be guided into the heat exchange tube segment via the manifold segment connected to the inlet end, and flows out from the manifold segment connected to the outlet end after exchanging heat with the components to be heat-exchanged, such as the battery cell, via the heat exchange tube segment. Since the tube width of at least one of the manifold segments is less than the tube width of the heat exchange tube segment, the width of the heat exchange tube segment can be increased, thereby increasing the heat exchange area, improving the heat exchange efficiency, ensuring the heat exchange effect, and reducing the risk of thermal runaway of the battery to which the thermal management device is applied. In addition, this arrangement can ensure that the manifold segments are arranged within a small space, thereby meeting the spatial layout requirements of the thermal management device and improving the space utilization rate of the thermal management device.

The thermal management device disclosed in the embodiments of the present application can be used in, but is not limited to be used in, electric devices such as vehicles, ships, or aircraft. The power system of the electric device may be composed of the thermal management device, the battery, and the like disclosed in the present application. This helps to improve the stability of battery performance and the lifespan of the battery.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

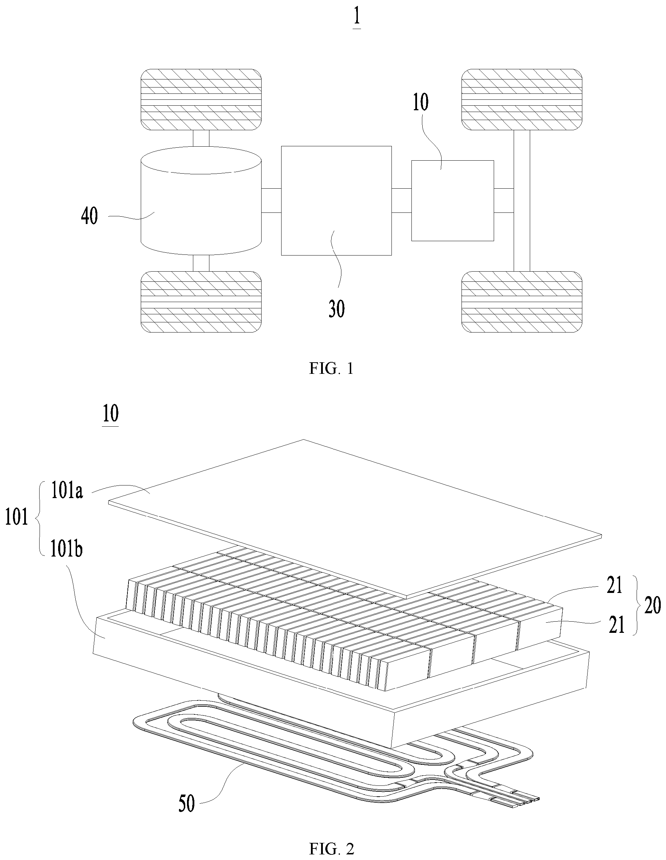

For example, FIG. 1 is a schematic structural diagram of a vehicle 1 according to one embodiment of the present application. The vehicle 1 may be a petrol or diesel vehicle, a natural gas vehicle, or a new energy vehicle. The new energy vehicle may be a pure electric vehicle, a hybrid vehicle, or an extended-range vehicle. A motor 40, a controller 30, and a battery 10 may be arranged inside the vehicle 1. The controller 30 is configured to control the battery 10 to power the motor 40. For example, the battery 10 may be disposed at the bottom, front, or rear of the vehicle 1. The battery 10 may be configured to supply power to the vehicle 1. For example, the battery 10 may serve as an operation power source for the vehicle 1 and is configured in a circuit system of the vehicle 1, for example, for the startup and navigation of the vehicle 1 and for the working power demand during operation. In another embodiment of the present application, the battery 10 may not only serve as an operation power source for the vehicle 1, but also serve as a driving power source for the vehicle 1 to, replacing or partially replacing fuel or natural gas, provide driving power for the vehicle 1.

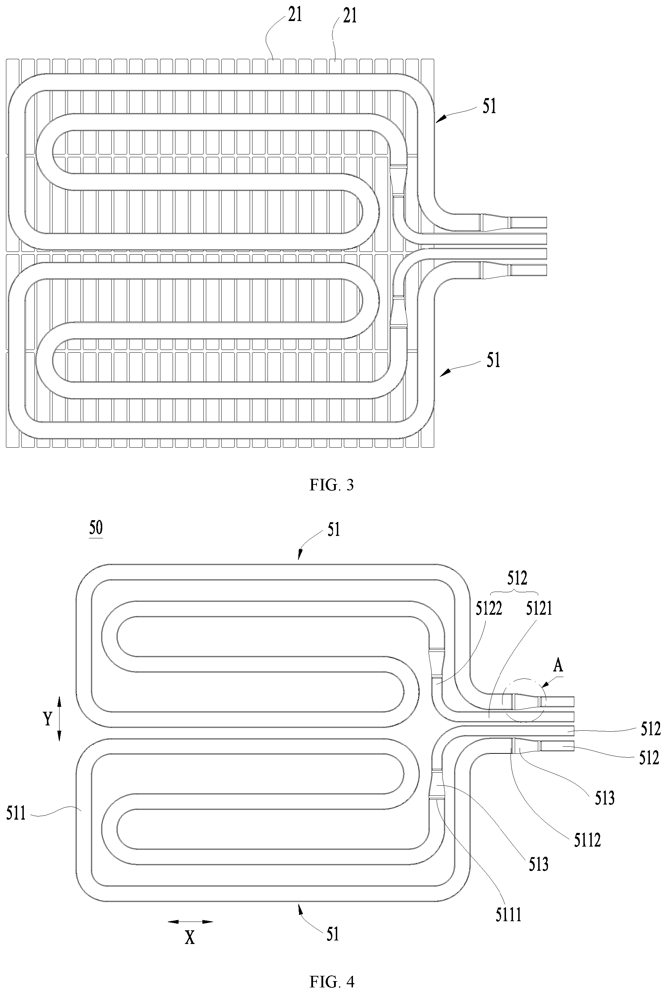

As shown in FIGs. 2 and 3, to meet different power usage requirements, the battery 10 may include a plurality of battery cells 21. The plurality of battery cells 21 may be connected in series, in parallel, or in series-parallel. The series-parallel connection refers to a mixture of series connection and parallel connection. The battery 10 may also be referred to as a battery pack. Optionally, the plurality of battery cells 21 may be first connected in series, in parallel, or in series-parallel to form a battery module 20, and then a plurality of battery modules 20 are connected in series, in parallel, or in series-parallel to form the battery 10. That is, the plurality of battery cells 21 may be directly assembled into the battery 10, or may be first assembled into the battery modules 20, and the battery modules 20 are then assembled into the battery 10.

The battery cell 21 may include a lithium-ion battery cell, a sodium-ion battery cell, a magnesium-ion battery cell, or the like, which is not limited in the embodiments of the present application. The battery cell 21 may be cylindrical, flat, rectangular parallelepiped-shaped, or in other shapes, which is also not limited in the embodiments of the present application. According to the packaging method, the battery cells 21 are typically divided into three types: cylindrical battery cells, prismatic battery cells, and pouch battery cells. This is also not limited in the embodiments of the present application. However, for the sake of brevity, the following embodiments are all illustrated using a cylindrical battery cell 21 as an example.

The battery 10 may further include a case 101 (or referred to as a cover) and a thermal management device 50. The interior of the case 101 is of a hollow structure, and the plurality of battery cells 21 are accommodated in the case 101.

The case 101 may be of a simple three-dimensional structure such as a single rectangular parallelepiped, cylinder, or sphere, or may also be of a complex three-dimensional structure composed of simple three-dimensional structures such as a rectangular parallelepiped, a cylinder, or a sphere, which is not limited in the embodiments of the present application. The case 101 may be made of an alloy material such as aluminum alloy and iron alloy, or a polymer material such as polycarbonate and polyisocyanurate foam plastic, or a composite material such as glass fiber plus epoxy resin, which is also not limited in the embodiments of the present application.

The case 101 is configured to accommodate the battery cell 21, and the case 101 may be of various structures. In some embodiments, the case may include a first case part 101a and a second case part 101b. The first case part 101a and the second case part 101b are mutually lidded with each other. The first case part 101a and the second case part 101b jointly define an accommodating space for accommodating the battery cells 21. The second case part 101b may be of a hollow structure with one end open, the first case part 101a is of a plate-like structure, and the first case part 101a lids the open side of the second case part 101b to form the case 101 having the accommodating space. The first case part 101a and the second case part 101b may each also be of a hollow structure with one side open, and the open side of the first case part 101a lids the open side of the second case part 101b to form the case having the accommodating space. Certainly, the first case part 101a and the second case part 101b may be of various shapes, such as a cylinder and a rectangular parallelepiped.

To improve the sealing performance after the first case part 101a and the second case part 101b are connected, a sealing member, such as a sealant or a seal ring, may be further provided between the first case part 101a and the second case part 101b.

If the first case part 101a lids the top part of the second case part 101b, the first case part 101a may also be referred to as an upper case cover, and the second case part 101b may also be referred to as a lower case body.

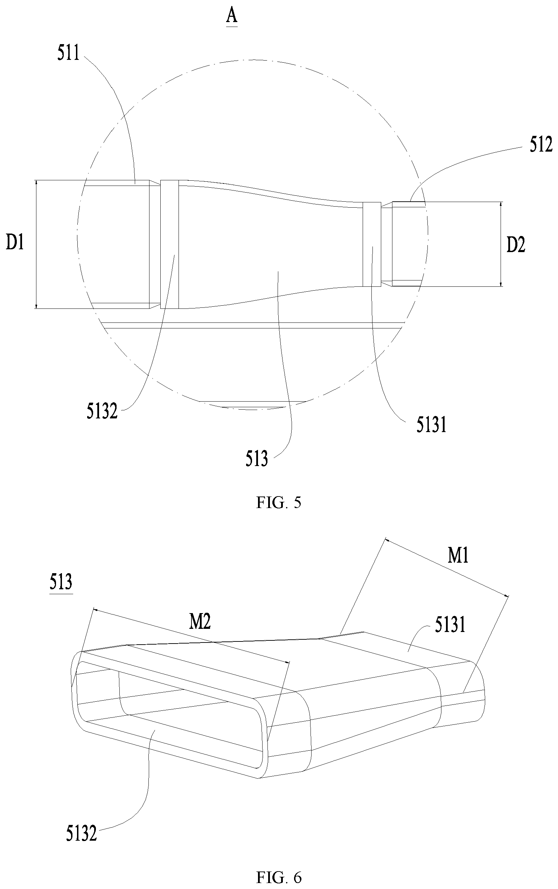

As shown in FIGs. 4 to 6, the thermal management device 50 may include a heat exchange unit 51. The heat exchange unit 51 includes a heat exchange tube segment 511 and manifold segments 512. The heat exchange tube segment 511 is provided with an inlet end 5111, an outlet end 5112, and a heat exchange channel communicating the inlet end 5111 with the outlet end 5112. The inlet end 5111 and the outlet end 5112 are both connected to the manifold segments 512. The tube width D2 of at least one of the manifold segments 512 is less than the tube width D1 of the heat exchange tube segment 511.

The number of the heat exchange units 51 included in the thermal management device 50 may be one, or may be two or more.

The structures of the manifold segments 512 connected to the inlet end 5111 and the outlet end 5112 may be the same. Certainly, differences may exist. For example, the length of the manifold segment 512 connected to one of the inlet end 5111 and the outlet end 5112 may be greater than the length of the manifold segment 512 connected to the other of the inlet end and the outlet end.

When the manifold segment 512 and the heat exchange tube segment 511 are both circular tubes, the tube width of the manifold segment 512 can be understood as the outer diameter of the tube of the manifold segment 512, and the tube width of the heat exchange tube segment 511 can be understood as the outer diameter of the heat exchange tube segment 511. When the manifold segment 512 and the heat exchange tube segment 511 are both flat tubes, the manifold segment 512 and the heat exchange tube segment 511 have a width direction, a thickness direction, and a fluid flow direction that are perpendicular to each other in space. The tube width of the manifold segment 512 can be understood as the width dimension in the width direction of the manifold segment, and the tube width of the heat exchange tube segment 511 can be understood as the width dimension in the width direction of the heat exchange tube segment.

The tube width D2 of the manifold segment 512 connected to the inlet end 5111 may be less than the tube width D1 of the heat exchange tube segment 511, or the tube width D2 of the manifold segment 512 connected to the outlet end 5112 may be less than the tube width D1 of the heat exchange tube segment 511. Certainly, both the tube width D2 of the manifold segment 512 connected to the inlet end 5111 and the tube width D2 of the manifold segment 512 connected to the outlet end 5112 may alternatively be less than the tube width D1 of the heat exchange tube segment 511.

The thermal management device 50 according to one embodiment of the present application includes a heat exchange unit 51. The heat exchange unit 51 includes a heat exchange tube segment 511 and manifold segments 512. The heat exchange medium can be guided into the heat exchange tube segment 511 via the manifold segment 512 connected to the inlet end 5111. The heat exchange medium may include liquids such as water and ethylene glycol. After exchanging heat with the components to be heat-exchanged, such as the battery cell 21, via the heat exchange tube segment 511, the heat exchange medium flows out from the manifold segment 512 connected to the outlet end 5112. Since the tube width D2 of at least one of the manifold segments 512 is less than the tube width D1 of the heat exchange tube segment 511, the width of the heat exchange tube segment 511 can be increased, thereby increasing the heat exchange area, improving the heat exchange efficiency, ensuring the heat exchange effect, and reducing the risk of thermal runaway of the battery to which the thermal management device 50 is applied. In addition, this arrangement can ensure that the manifold segments 512 are arranged within a small space, thereby meeting the spatial layout requirements of the thermal management device 50 and improving the space utilization rate of the thermal management device.

In some optional embodiments, in the thermal management device 50 according to one embodiment of the present application, the cross-sectional shape of the heat exchange tube segment 511 in the extension direction of the heat exchange tube segment is one of a polygon, an ellipse, and an obround, and at least part of the cross-sectional shape of the manifold segment 512 in the extension direction of the manifold segment is one of a polygon, an ellipse, and an obround.

The polygon includes a quadrilateral, a pentagon, and a hexagon, and is optionally a quadrilateral.

The extension direction of the heat exchange tube segment 511 and the manifold segment 512 can be understood as the flow direction of the heat exchange medium within the heat exchange tube segment 511 and the manifold segment 512.

The cross-sectional shape of the heat exchange tube segment 511 in the extension direction of the heat exchange tube segment may be the same as the cross-sectional shape of the manifold segment 512 in the extension direction of the manifold segment, but with different dimensions. For example, the cross-sectional shape of the heat exchange tube segment 511 in the extension direction of the heat exchange tube segment and the cross-sectional shape of the manifold segment 512 in the extension direction of the manifold segment may both be a polygon, an ellipse, or an obround. Certainly, in some embodiments, the cross-sectional shape of the heat exchange tube segment 511 in the extension direction of the heat exchange tube segment may also be different from the cross-sectional shape of the manifold segment 512 in the extension direction of the manifold segment. For example, one of the cross-sectional shapes may be a polygon, and the other of the cross-sectional shapes may be an ellipse, an obround, or the like.

When the cross-sectional shape is an ellipse, the tube width of the heat exchange tube segment 511 and the tube width of the manifold segment 512 can be understood as the major-axis dimension of the ellipse.

When the cross-sectional shape is an obround, the tube width of the heat exchange tube segment 511 and the tube width of the manifold segment 512 can be understood as the vertical distance between the opposite ends of the two semicircles of the obround.

When the cross-sectional shape is a polygon, for example, a quadrilateral, the tube width of the heat exchange tube segment 511 and the tube width of the manifold segment 512 can be understood as the dimension of the quadrilateral in the width direction.

In the above solution, the heat exchange tube segment 511 and the manifold segment 512 adopt the structural forms described above, allowing the heat exchange tube segment 511 and the manifold segment 512 to be arranged in a flat shape. Under the condition of flowing the same volume of heat exchange medium, this arrangement facilitates the increase in the contact area between the heat exchange tube segment 511 and the components to be heat-exchanged, such as the battery cell 21, thereby increasing the heat exchange area, ensuring the heat exchange effect, and reducing the risk of thermal runaway of the battery to which the thermal management device 50 is applied. In addition, the above arrangement facilitates the saving of the design space of the manifold segment 512, facilitates the spatial arrangement of the manifold segment 512, and improves the space utilization rate of the thermal management device.

As shown in FIGs. 4 to 7, in some optional embodiments, in the thermal management device 50 according to one embodiment of the present application, the cross-sectional shape of the heat exchange tube segment 511 in the extension direction of the heat exchange tube segment is a rectangle, and at least part of the cross-sectional shape of the manifold segment 512 in the extension direction of the manifold segment is a rectangle and/or at least part of the cross-sectional shape is a circle.

At least part of the cross-sectional shape of the manifold segment 512 in the extension direction of the manifold segment may be a rectangle, or the entire cross-sectional shape may be a rectangle. Certainly, the situation may be that part of the cross-sectional shape of the manifold segment 512 in the extension direction of the manifold segment is a rectangle and part of the cross-sectional shape is a circle. Certainly, in some embodiments, the entire cross-section of the manifold segment 512 in the extension direction of the manifold segment may also be a circle.

The manifold segment 512 may be connected to the heat exchange tube segment 511 via the portion with a rectangular cross-section and be connected to the inlet and outlet of the heat exchange medium via the portion with a circular cross-section.

The portion of the manifold segment 512 with a rectangular cross-section and the portion with a circular cross-section may be connected as a whole via a transition segment.

When at least part of the cross-sectional shape of the manifold segment 512 in the extension direction of the manifold segment is a rectangle and at least part of the cross-sectional shape is a circle, the width of the manifold segment 512 can be understood as that the width of the rectangular cross-sectional shape and the radial dimension of the circular cross-sectional shape are both less than the tube width D1 of the heat exchange tube segment 511.

In the above solution, by allowing the cross-sectional shape of the heat exchange tube segment 511 in the extension direction of the heat exchange tube segment to be a rectangle, and allowing at least part of the cross-sectional shape of the manifold segment 512 in the extension direction of the manifold segment to be a rectangle and at least part of the cross-sectional shape to be a circle, the contact area between the heat exchange tube segment 511 and the components to be heat-exchanged, such as the battery cell 21, can be ensured to be increased, thereby increasing the heat exchange area and ensuring the heat exchange effect. In addition, the above arrangement also facilitates the layout of the manifold segments 512 and the connection with the inlet and outlet of the heat exchange medium.

With further reference to FIGs. 4 to 6, in some optional embodiments, in the thermal management device 50 according to one embodiment of the present application, the manifold segments 512 connected to the inlet end 5111 and the outlet end 5112 are located on the same side of the heat exchange tube segment 511 in a first direction X and are spaced apart in a second direction Y, and the second direction Y is arranged to intersect with the first direction X.

The inlet end 5111 and the outlet end 5112 may be located on the same side of the heat exchange channel in the first direction X, such that the manifold segments 512 to which the inlet end 5111 and the outlet end 5112 are respectively connected are located on the same side of the heat exchange tube segment 511 in the first direction X.

The angle at which the first direction X intersects with the second direction Y may be 85° to 95°, optionally 90°; that is, the first direction X and the second direction Y are optionally perpendicular to each other.

In the above solution, by allowing the manifold segments 512 connected to the inlet end 5111 and the outlet end 5112 to be located on the same side of the heat exchange tube segment 511 in the first direction X and be spaced apart in the second direction Y, the spatial arrangement of the manifold segments 512 is facilitated. In addition, the above arrangement enables the heat exchange tube segment 511 to be bent, thereby increasing the distribution length of the heat exchange tube segment 511, ensuring the contact area with the components to be heat-exchanged such as the battery cell, ensuring the heat exchange effect, and reducing the risk of thermal runaway of the battery 10 to which the thermal management device 50 is applied.

With further reference to FIGs. 4 to 7, in some optional embodiments, in the thermal management device 50 according to one embodiment of the present application, the heat exchange unit 51 further includes an adapter tube segment 513, the adapter tube segment 513 is provided with a first port 5131 and a second port 5132 that are in communication with each other, the opening width M1 of the first port 5131 is less than the opening width M2 of the second port 5132, the first port 5131 is connected to the manifold segment 512, and the second port 5132 is connected to one of the inlet end 5111 and the outlet end 5112.

The adapter tube segment 513 may be a tube with varying width dimensions. The first port 5131 of the adapter tube segment 513 may match the shape of the manifold segment 512, and the two may be connected by means of insertion, welding, or the like. The second port 5132 of the adapter tube segment 513 may match the shape of the manifold segment 512, and the two may be connected by means of insertion, welding, or the like.

In the above solution, by allowing the heat exchange unit 51 to further include the adapter tube segment 513, the connection between the heat exchange tube segment 511 with varying width dimensions and the manifold segment 512 via the adapter tube segment 513 is facilitated, thereby ensuring the requirements for the communication between the heat exchange tube segment 511 and the manifold segment 512 and reducing the forming difficulty of the thermal management device. In addition, the manifold segment 512 and the adapter tube segment 513 of corresponding widths are allowed to be matched based on different spatial arrangement requirements, thereby improving the versatility of the thermal management device 50.

In some optional embodiments, in the thermal management device 50 according to one embodiment of the present application, the width of the adapter tube segment 513 gradually increases in the direction from the first port 5131 to the second port 5132.

In the direction of the first port 5131 and the second port 5132, the first port 5131 and the second port 5132 may be in the form of a port that extends with an equal width for a predetermined length, and the width of the adapter tube segment 513 gradually increases in the portion between the first port 5131 and the second port 5132.

In the above solution, by allowing the width of the adapter tube segment 513 to gradually increase, the resistance, caused by an abrupt change in the width dimension of the heat exchange tube segment 511 and the manifold segment 512, to the flow of the heat exchange medium can be reduced, thereby ensuring the smooth circulation of the heat exchange medium and ensuring the heat exchange effect of the thermal management device 50.

In some optional embodiments, in the thermal management device 50 according to one embodiment of the present application, the inlet end 5111 and the outlet end 5112 are both connected to the corresponding manifold segment 512 via the adapter tube segment 513.

The extension directions of the adapter tube segments 513 to which the inlet end 5111 and the outlet end 5112 are connected may be consistent or intersect with each other. The extension lengths of the adapter tube segments 513 to which the inlet end 5111 and the outlet end 5112 are connected in the circulation direction of the heat exchange medium may be consistent, or certainly, the extension length of one of the adapter tube segments may be greater than the extension length of the other of the adapter tube segments.

In the above solution, by allowing the inlet end 5111 and the outlet end 5112 to be connected to the corresponding manifold segment 512 via the adapter tube segment 513, the connection between the heat exchange tube segment 511 with varying width dimensions at different positions and the manifold segment 512 via the adapter tube segment 513 is facilitated, thereby ensuring the requirements for the communication between the heat exchange tube segment 511 and the manifold segment 512.

In some optional embodiments, in the thermal management device 50 according to one embodiment of the present application, at least one of the manifold segments 512 includes a first portion 5121 and a second portion 5122 that are arranged to intersect and are in communication with each other, and the second portion 5122 is connected to one of the inlet end 5111 and the outlet end 5112 via the adapter tube segment 513.

The included angle between the first portion 5121 and the second portion 5122 may be any value between 60° and 150°, optionally between 80° and 100°, and illustratively, optionally 90°.

The first portion 5121 and the second portion 5122 may be both arranged as a flat tube, or the second portion 5122 may be arranged as a flat tube. The first portion 5121 may be arranged as a flat tube, or may be arranged as a circular tube.

The second portion 5122 may be directly connected to the inlet end 5111 or the outlet end 5112. Certainly, when the adapter tube segment 513 is included, the second portion 5122 is connected to the inlet end 5111 or the outlet end 5112 via the adapter tube segment 513.

One of the manifold segments 512 may include the first portion 5121 and the second portion 5122 that are arranged to intersect and are in communication with each other. Certainly, each manifold segment 512 may alternatively include the first portion 5121 and the second portion 5122 that are arranged to intersect and are in communication with each other.

In the above solution, by allowing the manifold segment 512 to include the first portion 5121 and the second portion 5122 that are arranged to intersect and are in communication with each other, and allowing the second portion 5122 to be connected to one of the inlet end 5111 and the outlet end 5112, the requirements for the connection between the manifold segment 512 and the heat exchange tube segment 511 can be ensured to be met, and the portion of the manifold segment 512 in communication with at least one of the inlet and the outlet of the heat exchange medium can be reversed relative to the heat exchange tube segment 511, thereby reducing the space occupied by the thermal management device 50 in the manifold segment 512 and facilitating the spatial layout of the thermal management device 50 on the basis of ensuring the heat exchange requirements.

It can be understood that the connection method between the manifold segment 512 and the heat exchange tube segment 511 is not limited to the use of the adapter tube segment 513. In some embodiments, the heat exchange tube segment 511 may also be directly connected to the manifold segment 512.

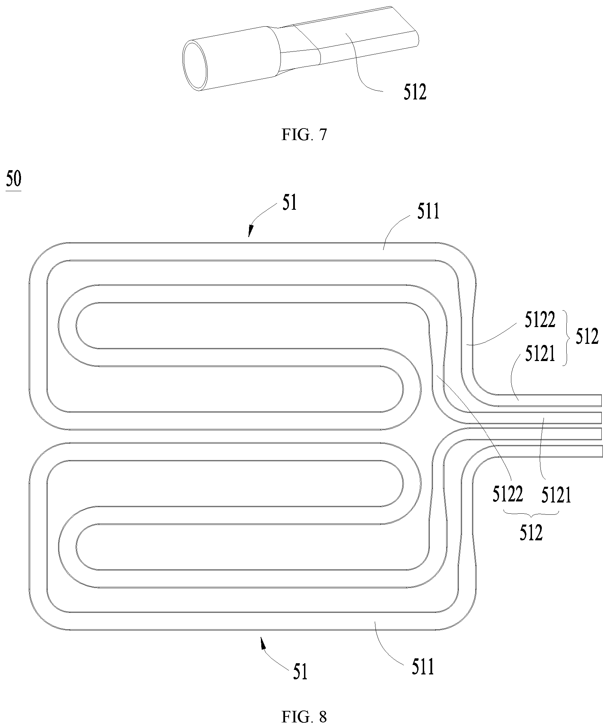

As shown in FIG. 8, optionally, the heat exchange tube segment 511 and the manifold segment 512 may adopt an integrated structure.

The heat exchange unit 51 may use the cold pressing or hot forming process to neck down the diameter of the heat exchange tube segment 511 in the form of a flat tube with a large tube diameter, so as to fit the manifold segment 512 in the form of a small tube diameter.

In the above solution, by allowing the heat exchange tube segment 511 and the manifold segment 512 to be of an integrated structure, the requirements for the connection strength between the heat exchange tube segment 511 and the manifold segment 512 can be ensured to be met, thereby ensuring the sealing performance of the heat exchange unit 51, and meanwhile simplifying the forming process.

It can be understood that when the heat exchange tube segment 511 and the manifold segment 512 are directly connected with each other, it is not limited to allowing the heat exchange tube segment 511 and the manifold segment 512 to adopt the integrated structure.

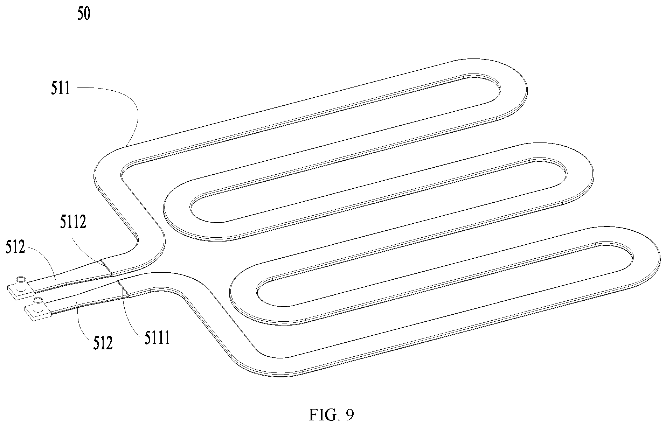

As shown in FIG. 9, in some optional embodiments, in the thermal management device 50 according to one embodiment of the present application, the manifold segment 512 may also be partially inserted into one of the inlet end 5111 and the outlet end 5112 and be connected to the heat exchange tube segment 511.

The shape of the portion of the manifold segment 512 connected to one of the inlet end 5111 and the outlet end 5112 may match the shape of the inlet end 5111 or the outlet end 5112. After the manifold segment 512 is partially inserted into one of the inlet end 5111 and the outlet end 5112, the relative positions of the manifold segment 512 and the heat exchange tube segment 511 can be fixed by welding or the like.

In the above solution, by allowing the manifold segment 512 to be partially inserted into one of the inlet end 5111 and the outlet end 5112 and be connected to the heat exchange tube segment 511, the requirements for the connection between the manifold segment 512 and the heat exchange tube segment 511 can be ensured to be met, and the manifold segment 512 and the heat exchange tube segment 511 can be formed separately and then connected, thereby reducing the forming difficulty.

In some optional embodiments, in the thermal management device 50 according to one embodiment of the present application, the liquid passage area of the manifold segment 512 is less than the liquid passage area of the heat exchange tube segment 511.

The liquid passage area can be understood as the cross-sectional area through which the heat exchange medium flows.

In the above solution, by allowing the liquid passage area of the manifold segment 512 to be less than the liquid passage area of the heat exchange tube segment 511, the reduction in the width of the manifold segment 512 is facilitated, thereby ensuring the spatial layout requirements of the thermal management device 50.

In some optional embodiments, in the thermal management device 50 according to one embodiment of the present application, the thermal management device 50 includes two or more heat exchange units 51, and the two or more heat exchange units 51 are spaced apart in the same direction.

The number of the heat exchange units 51 included in the thermal management device 50 may be two, three, or more. Illustratively, the heat exchange units 51 included in the thermal management device 50 may be arranged in pairs, and the heat exchange units 51 arranged in pairs may be symmetrically distributed relative to each other.

In the above solution, by providing two or more heat exchange units 51 included in the thermal management device 50, the number of the heat exchange units 51 can be adjusted based on the heat exchange requirements of apparatuses such as the battery 10, thereby ensuring the heat exchange effect.

As shown in FIGs. 4 to 7, according to some embodiments of the present application, the present application provides a thermal management device 50. The thermal management device includes heat exchange units 51 arranged in pairs. The heat exchange units 51 arranged in pairs are symmetrically distributed relative to each other. Each heat exchange unit 51 includes a heat exchange tube segment 511, manifold segments 512, and an adapter tube segment 513. The heat exchange tube segment 511 is provided with an inlet end 5111, an outlet end 5112, and a heat exchange channel communicating the inlet end 5111 with the outlet end 5112. The inlet end 5111 and the outlet end 5112 are both connected to the manifold segments 512. The tube width D2 of each manifold segment 512 is less than the tube width D1 of the heat exchange tube segment 511. The cross-sectional shape of the heat exchange tube segment 511 in the extension direction of the heat exchange tube segment is a quadrilateral, and the cross-sectional shape of the manifold segment 512 in the extension direction of the manifold segment is a quadrilateral. The manifold segments 512 connected to the inlet end 5111 and the outlet end 5112 are located on the same side of the heat exchange tube segment 511 in a first direction X and are spaced apart in a second direction Y, and the second direction Y is perpendicular to the first direction X. The portions of the heat exchange channel at the inlet end 5111 and the outlet end 5112 are arranged to be bent. The inlet end 5111 and the outlet end 5112 are both connected to the corresponding manifold segment 512 via the adapter tube segment 513. The adapter tube segment 513 is provided with a first port 5131 and a second port 5132 that are in communication with each other, the opening width M1 of the first port 5131 is less than the opening width M2 of the second port 5132, the first port 5131 is connected to the manifold segment 512, and the second port 5132 is connected to one of the inlet end 5111 and the outlet end 5112. The width of the adapter tube segment 513 gradually increases in the direction from the first port 5131 to the second port 5132. For the two manifold segments 512 included in the heat exchange unit 51, one manifold segment 512 includes a first portion 5121 and a second portion 5122 that are arranged to intersect and are in communication with each other, and the second portion 5122 is connected to one of the inlet end 5111 and the outlet end 5112 via the adapter tube segment 513.

In another aspect, according to one embodiment of the present application, a battery is provided. The battery includes the thermal management device 50 described above. The heat exchange effect is excellent, and the battery cells can operate at a proper temperature, resulting in high reliability.

In yet another aspect, an electric device according to the present application includes the battery described above.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A thermal management device, comprising a heat exchange unit, wherein the heat exchange unit comprises:
a heat exchange tube segment, the heat exchange tube segment being provided with an inlet end, an outlet end, and a heat exchange channel communicating the inlet end with the outlet end; and
manifold segments, the inlet end and the outlet end both being connected to the manifold segments,
wherein a tube width of at least one of the manifold segments is less than a tube width of the heat exchange tube segment.

2. The thermal management device according to claim 1, wherein a cross-sectional shape of the heat exchange tube segment in an extension direction of the heat exchange tube segment is one of a polygon, an ellipse, and an obround, and at least part of a cross-sectional shape of the manifold segment in an extension direction of the manifold segment is one of a polygon, an ellipse, and an obround.

3. The thermal management device according to claim 2, wherein the cross-sectional shape of the heat exchange tube segment in the extension direction of the heat exchange tube segment is a rectangle, and at least part of the cross-sectional shape of the manifold segment in the extension direction of the manifold segment is a rectangle and/or at least part of the cross-sectional shape is a circle.

4. The thermal management device according to any one of claims 1 to 3, wherein the manifold segments connected to the inlet end and the outlet end are located on a same side of the heat exchange tube segment in a first direction and are spaced apart in a second direction, and the second direction is arranged to intersect with the first direction.

5. The thermal management device according to any one of claims 1 to 4, wherein the heat exchange unit further comprises an adapter tube segment, the adapter tube segment is provided with a first port and a second port that are in communication with each other, an opening width of the first port is less than an opening width of the second port, the first port is connected to the manifold segment, and the second port is connected to one of the inlet end and the outlet end.

6. The thermal management device according to claim 5, wherein a width dimension of the adapter tube segment gradually increases in a direction from the first port to the second port.

7. The thermal management device according to claim 5, wherein the inlet end and the outlet end are both connected to a corresponding manifold segment via the adapter tube segment.

8. The thermal management device according to any one of claims 1 to 4, wherein the heat exchange tube segment and the manifold segment are of an integrated structure.

9. The thermal management device according to any one of claims 1 to 4, wherein the manifold segment is partially inserted into one of the inlet end and the outlet end and is connected to the heat exchange tube segment.

10. The thermal management device according to any one of claims 1 to 9, wherein at least one of the manifold segments comprises a first portion and a second portion that are arranged to intersect and are in communication with each other, and the second portion is connected to one of the inlet end and the outlet end.

11. The thermal management device according to any one of claims 1 to 10, wherein a liquid passage area of the manifold segment is less than a liquid passage area of the heat exchange tube segment.

12. The thermal management device according to any one of claims 1 to 11, wherein two or more heat exchange units are provided, and the two or more heat exchange units are spaced apart in a same direction.

13. A battery, comprising the thermal management device according to any one of claims 1 to 12.

14. An electric device, comprising the battery according to claim 13.
